# EUROPEAN PATENT SPECIFICATION

(11) **EP 3 548 714 B1**
(45) Date of publication and mention of the grant of the patent: **10.12.2025**
(21) Application number: 17818624.3
(22) Date of filing: 30.11.2017
(51) Int. Cl.: F01K 25/00, F01K 23/10

(54) **ORGANIC RANKINE CYCLE IN CRYOGENIC APPLICATIONS OR REFRIGERATING FLUIDS**
ORGANISCHER RANKINE-ZYKLUS IN KRYOGENEN ANWENDUNGEN ODER KÜHLFLÜSSIGKEITEN
CYCLE DE RANKINE ORGANIQUE DANS DES APPLICATIONS CRYOGÉNIQUES OU DE FLUIDES FRIGORIGÈNES

(30) Priority: 30.11.2016 IT 201600121521
(43) Date of publication of application: 09.10.2019
(73) Proprietor: Saipem S.p.A., 20138 Milano (IT)
(72) Inventor: ASTOLFI, Marco, 20138 Milano (IT); MACCHI, Ennio, 20138 Milano (IT); VALENTI, Gianluca, 20138 Milano (IT); DE RINALDIS, Salvatore, 20138 Milano (IT); INGLESE, Luca Davide, 20138 Milano (IT); LEPORE, Alessandro, 20138 Milano (IT); MELONI, Fabrizio, 20138 Milano (IT)
(74) Representative: Croce, Valeria
(86) International application number: PCT/IB2017/057523
(87) International publication number: WO 2018/100522

(56) References cited:
- EP-A1- 2 278 210
- CN-U- 204 572 093
- FR-A1- 2 496 754

## Description

### Technical field of the invention

The present invention finds application in the energy sector, in particular for the regasification of liquefied gases, such as natural gas, and for the regasification/vaporization of technical gases stored at low temperatures or at cryogenic temperatures.

### Prior art

Documents FR2496754A1, EP2278210A1 and CN204572093U disclose regasification processes of a liquefied gas using Rankine cycles.

There are known technologies for the regasification of liquefied gases, such as liquefied natural gas (LNG).

The liquefied natural gas is a mixture of natural gas mainly consisting of methane and, to a lesser extent, of other light hydrocarbons such as ethane, propane, isobutane, *n*-butane, pentane, and nitrogen, which is converted from the gaseous state, which is found at room temperature, to the liquid state, at about -160°C, to allow its transportation.

The liquefaction plants are located in the proximity of natural gas production sites, while the regasification plants (or "regasification terminals") are located in the proximity of the users.

Most of the plants (about 85%) are located onshore while the rest (about 15%) offshore on platforms or ships.

It is common that each regasification terminal comprises more regasification lines, to satisfy the load of liquefied natural gas or the demands, as well as for flexibility or technical requirement reasons (for example, for maintenance of a line).

Normally, the regasification technologies involve liquefied natural gas stored in tanks at atmospheric pressure at a temperature of -160°C and comprises the steps of the fluid compression up to about 70-80 bar and the vaporization and superheating up to about 3°C.

The thermal power required for regasifying 139 t/h is about 27 MWt, while the electrical power is about 2.25 MWe (4.85 MWe if the other auxiliary loads of the plant are taken into account; 19.4 MWe electrical load maximum of the plant on 4 regasification lines).

Among the most used, individually or in combination with each other, there are the Open Rack Vaporizer (ORV) technology, used in about 70% of the regasification terminals, and the Submerged Combustion Vaporizer (SCV).

### Open Rack Vaporizer (ORV)

This technology requires that the natural gas at liquid state (about 70-80 bar and at a temperature of -160°C) is made to flow from the bottom upwards within aluminum tubes flanked to form panels; the vaporization progressively occurs as the fluid proceeds.

The heat carrier is the seawater which flowing from the top downwards on the outer surface of the tubes provides the heat required for vaporization by a difference in temperature.

In particular, the heat exchange is optimized by the design of the profile and of the superficial roughness of the tubes, which carry out a homogeneous distribution of the thin film of seawater on the panel.

### Submerged Combustion Vaporizer (SCV)

Such a technology uses a demineralized water bath heated by a submerged flame burner as a heat carrier; in particular, Fuel Gas (FG) is burned into the combustion section and the produced fumes pass through a coil of perforated tubes from which the combustion gas bubbles come out of, that heat the water bath also transferring the condensation heat.

The liquefied natural gas (LNG) vaporizes in another coil of stainless steel tubes submerged in the same demineralized and heated water bath.

The same bath of water is kept in circulation in order to guarantee a homogeneous distribution of the temperature.

On the other hand, the exhausted fumes are discharged by the venting stack of the SCV.

### Organic Rankine Cycle

The organic fluid Rankine cycles (ORC) are widely used in the geothermics field and for biomass applications or for Waste Heat Recovery from industrial processes.

Such cycles provide the possibility of selecting the working fluid from tens of fluid candidates and allows carrying out efficient thermo-dynamic cycles, even for low temperatures of the source and for little heat availability.

Furthermore, the choice of a low boiling fluid allows carrying out a cycle condensed at cryogenic temperatures, without incurring freezing problems or excessive vacuum degrees.

The US patent application US 2013/0160486 (Ormat Technologies Inc.) describes single level or two level pressure cycles which operate with a single fluid, with and without heat exchanges within the cycle (regenerations) on both levels; in an embodiment two cycles in cascade with two different fluids are operated, wherein the heat of a first cycle is only used to evaporate the second fluid and the liquefied natural gas is vaporized with only the heat released by the cycle of the second fluid.

The technology provided by such a patent application, however, hinders the efficiency.

In fact, the heat of the cycle of the first fluid is only used for vaporizing the organic fluid of the second cycle and regenerations in the cycle of the second fluid are not provided.

Furthermore, the liquefied natural gas is vaporized with only the heat of the cycle of the second fluid, which condenses only using the fraction of the available refrigeration units of the liquefied natural gas, corresponding to temperatures lower than that of condensation of the organic fluid of the cycle of the second fluid.

There may still be problems of balancing electrical and thermal loads in the configurations wherein the heat provided by a primary power cycle (gas turbine or internal combustion engine) or by a combined cycle is used, wherein it has an overall increase in electrical production; in other words, the electrical power of the primary power cycle added to the electrical power of the closed cycle (ORC) may exceed that required by the plant or by the rigasification line.

With particular reference to the Submerged Combustion Vaporizer (SCV), such a technology implies a fuel gas consumption equal to about 1.5% of the gas produced, produces carbon dioxide which lowers the pH of the water bath requiring treatments with caustic soda and determines a production of CO₂ of about 50,000 t/year to regasify 139 t/h.

However, as regards the Open Rack Vaporizer, such technology may partially cause the freezing of the seawater in the outer part of the tubes, especially in the sections wherein the LNG is most cold; furthermore: i) it may be used in the geographic regions and/or in the season wherein the seawater temperature is at least 5-9°C, mainly represented by the subtropical zones, ii) the seawater must be treated in advance to eliminate or reduce the content of heavy metals which could corrode the zinc coating of the tubes, iii) implies an electrical energy consumption for operating the seawater pumps which must overcome a geodetic difference in level equal to the development in height of the ORV with additional consumption of 1.2 MWe per regasification line with respect to the SCV technology (total plant power equal to 24.2 MWe), iv) finally, the technology is quite complex and is available by a limited number of suppliers and of sizes.

Therefore, in general, the conventional technologies do not allow producing the electrical energy required for the plant and leads to the loss of a great quantity of energy in the form of refrigeration units.

### Summary of the invention

The authors of the present invention have surprisingly found that it is possible to introduce at least one cycle of the Organic Rankine (ORC) type into a traditional regasification line of liquefied gas, preferably two cycles of the organic rankine type in cascade, which operate with two different fluids and wherein the condensation heat of the cycle of a fluid is used for evaporating a second fluid and for vaporizing the liquefied natural gas.

### Object of the invention

The process according to the invention is defined in claim 1 and the regasification line according to the invention is defined in claim 21. Aspects of the invention are defined in the dependent claims.

### Brief description of the figures

Figure 1 shows a first embodiment of a regasification line according to the present invention wherein a low temperature thermal energy source is used;
Figure 2 shows an alternative embodiment of the regasification line according to the present invention;
Figures 3 and 3A show two embodiments of the regasification line according to the present invention;
Figure 4 shows a third embodiment of the regasification line according to the present invention;
Figures 5A and 5B show alternative examples of configurations of the turbines and of the generators of the regasification line of the present invention;
Figure 6 shows a diagram of a plant according to the present invention;

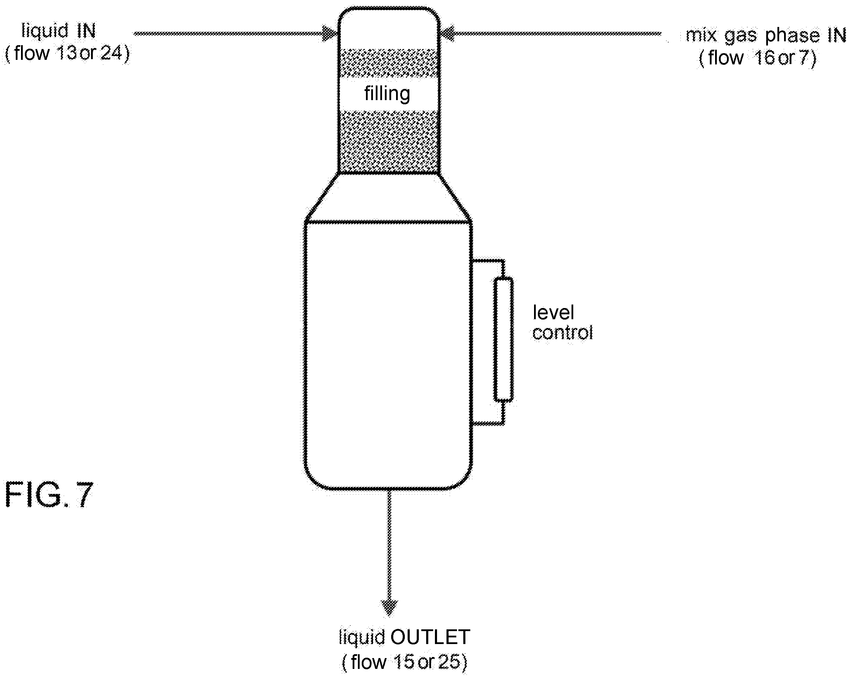

Figure 7 shows the diagram of a recondenser.

### Detailed description of the invention

The present invention is described in particular in relation to the regasification of liquefied natural gas (LNG), wherein, however, the regasification line, the regasification terminal and the regasification process hereinafter described are equally applicable for the regasification or vaporization of other liquefied fluids stored at low temperatures (lower than about 0°C) or at cryogenic temperatures (lower than -45°C).

For example, the present invention will find application for the regasification of a liquefied gas chosen from the group comprising for example: air, nitrogen, hydrocarbon compounds, e.g. alkanes, such as for example propane and butane, or alkenes, such as for example ethylene and propylene; hydrogen.

In a preferred aspect, the invention refers to the regasification of the liquefied natural gas.

For simplicity of description, in the following description and in the figures reference shall be made to liquefied natural gas (LNG).

In the following description, the terms "evaporation" and "vaporization" are meant as synonyms, as well as the term "regasification".

For the purposes of the present invention, in the following description reference is made to "economizer" meaning with such a term a heat exchanger realized by a pressure container in which a mixed heat exchange is performed (that is, with direct contact) between a (saturated or superheated) organic vapor current inlet and an organic fluid current in supercooled liquid state which is also inlet, obtaining an outlet current of saturated organic liquid; such a current is subsequently sent to the evaporator ready to be vaporized.

The term "recondenser" is intended to mean a heat exchanger realized by a pressure container, wherein a filling material (for example metal grit or plastic material chips) is inserted into a part of it, which has the function of increasing the contact surface and therefore the heat exchange between the fluids which must be mixed; at the bottom of the container (also of cylindrical shape), the mixture accumulates after the heat exchange and by virtue of control valves which regulate the level, the temperature and other process parameters.

Furthermore, in the present description, "liquefied gas" is intended to mean a fluid of mainly liquid component.

In the present description, "regeneration" is intended to mean a heat exchanger within a thermo-dynamic cycle when the heat exchange occurs by direct contact with fluids coming from the same thermo-dynamic cycle, made for example with mixed heat exchangers, which allow reducing the irreversibility increasing the efficiency thereof (actually, regenerating the thermo-dynamic cycle).

For the objects of the present invention, an economizer or a recondenser allow also carrying out a regeneration.

Furthermore, in the present description, the term "low temperature heat source" is intended to mean for example: ambient air, seawater, low temperature solar heating, exhausted heat of a low temperature thermo-dynamic cycle, process heat recoveries and/or low temperature machinery.

A low temperature source generally operates at temperatures lower than 180°C, preferably lower than 120°C.

The term **"high** temperature heat source" is instead intended to mean for example: high temperature solar heating, exhausted heat of a high temperature thermo-dynamic cycle, discharge gas of a gas turbine or internal combustion engine, process heat recoveries and/or high temperature machinery.

A high temperature source generally operates at temperatures higher than 180°C, preferably higher than 300°C and even more preferably higher than 400°C.

In the following description, by the term "seawater" reference is made not only to pumped seawater, and suitably treated to remove sediments, but also more in general to fresh water, obtained from rivers, canals, wells, natural basins such as lakes, etc. and artificial basins.

According to an object of the present invention, a regasification line for liquefied natural gas (LNG) is described.

The term "regasification line" is intended to mean the plant portion which comprises the structures, the equipment, the machinery and the systems for the regasification of liquefied natural gas (LNG).

Such structures, equipment, machinery and systems originate, in particular, from the tank wherein the LNG is stored and terminates with the inlet point of the regasified LNG in the distribution network of the gas itself.

More in detail, in the tank the liquefied natural gas (LNG) is stored at atmospheric pressure and at a temperature of about -160°C.

In particular, the liquefied gas tank may be located in a place or in a structure different than that of the regasification plant, which for example could be onshore or offshore.

The invention, in fact, is applied to onshore and, due to the availability of seawater, offshore plants and on floaters.

A traditional regasification line comprises a vaporization bath, which may be of the Submerged Combustion Vaporizer type (SCV).

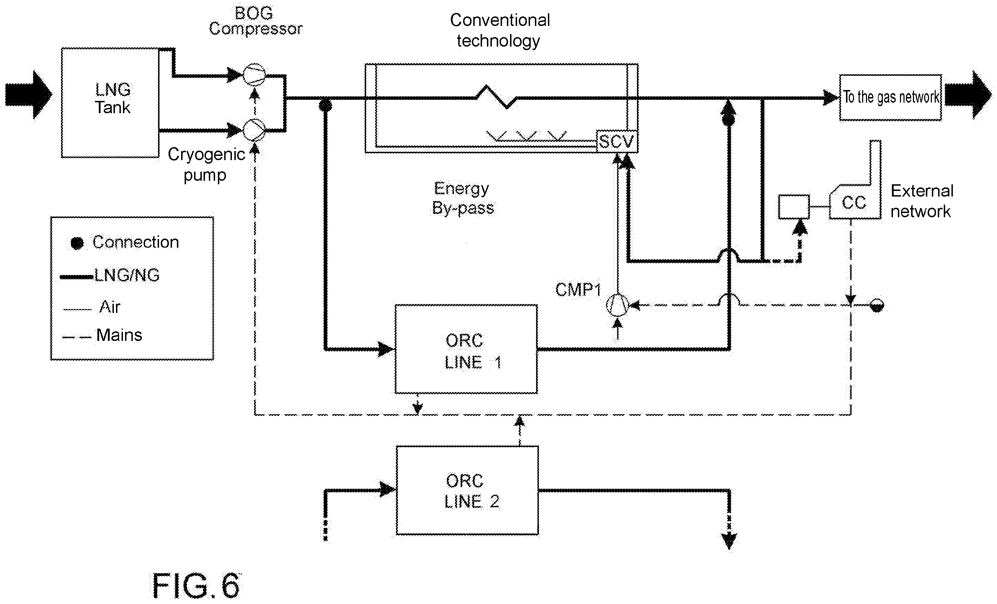

The vaporization bath of the SCV type further comprises its own air feeding circuit with its compressor (CMP1 in figure 6).

Before entering in the vaporization bath, the LNG may be subjected to a preliminary compression step to bring it to a pressure of about 70÷80 bar.

The compression is operated by a low pressure pump (which consumes about 400 kWe) and by a high pressure one (which consumes about 1300 kWe), which operate in series.

In figure 6 BOG represents the boil off gas compressors (BOG) of the regasification line.

At the inlet of the bath of the vaporizing section, the liquefied gas may be at the supercritical state.

Within the SCV bath, the liquefied natural gas is vaporized and superheated up to a temperature of about 3°C.

Once vaporized, the natural gas may be introduced into the natural gas distribution network.

According to an object of the present invention, the traditional regasification line (the "base" circuit) described above can be modified so as to comprise an energy by-pass circuit for the regasification of the liquefied gas, for example represented by liquefied natural gas (LNG).

In particular, the integration between the two circuits is at the drawing connection of the liquefied natural gas from the base circuit and at the reintroducing connection of the liquefied natural gas regasified in the base circuit destined for the distribution network.

Preferably, the drawing connection is downstream of the cryogenic pumps and upstream of the vaporization bath (SCV).

For the purposes of the present invention, there are therefore described:
- a traditional regasification line, already existing, modified so as to integrate a liquefied natural gas regasification by-pass circuit (revamping); and
- a regasification line consisting of the by-pass circuit as the main line, for example for making new plants.

### Energy by-pass circuit for the regasification of the liquefied natural gas (LNG)

For the purposes of the present invention, such a circuit, which actually in fact is a regasification line, comprises:
- a first heating section (COND1),
- a second heating section (COND2).

According to an aspect of the invention, a third heating section (SH1) may be further provided.

In particular, the first heating section (COND1) is part of a first cycle which operates with a first organic fluid (OF1), while the second heating section (COND2) is part of a second cycle which operates with a second organic fluid (OF2).

The third heating section (SH1) operates instead with a third fluid (SW).

For the purposes of the present invention, said organic fluids are mutually different.

In particular, said first organic fluid (OF1) is chosen from the group comprising: alkanes such as for example ethane and propane, alkenes such as for example ethylene and refrigerating fluids represented for example by R41, R143a, R125.

In a preferred aspect of the invention, the first organic fluid is ethane.

In particular, said second organic fluid (OF2) is chosen from the group comprising: alkanes for example ethane and propane, alkenes for example ethylene and refrigerating fluids represented for example by R143, R32, R143a, R125.

In a preferred aspect of the invention, the second organic fluid is propane.

As regards the third heating section (SH1), this operates on the cycle of a third fluid.

For the purposes of the present invention, said third fluid is represented by a low temperature source and, in a preferred aspect, is represented by seawater.

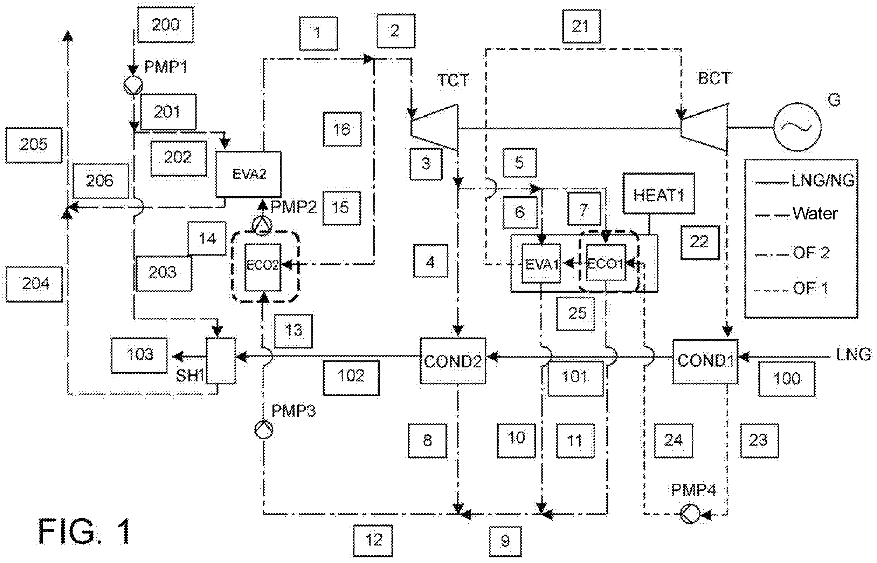

As regards the first cycle (or also "cycle of the first organic fluid"), in a first embodiment of the invention shown in figure 1, this further comprises a heating section (HEAT1), wherein a step of heating said first organic fluid (OF1) is performed.

In a preferred aspect shown in figure 1, such heating is performed by a heat exchanger wherein said first organic fluid (OF1) acquires heat from the second organic fluid (OF2).

More in particular, the heating section (HEAT1) in turn comprises:
- a first evaporator (EVA1) and
- a first heat exchanger (ECO1),
wherein the heat exchange is performed with said second organic fluid (OF2).

In a preferred aspect, in such an embodiment, the first heat exchanger ECO1 is a traditional heat exchanger, for example of the tube bundle type.

In a more preferred aspect, the first heat exchanger ECO1 is an economizer.

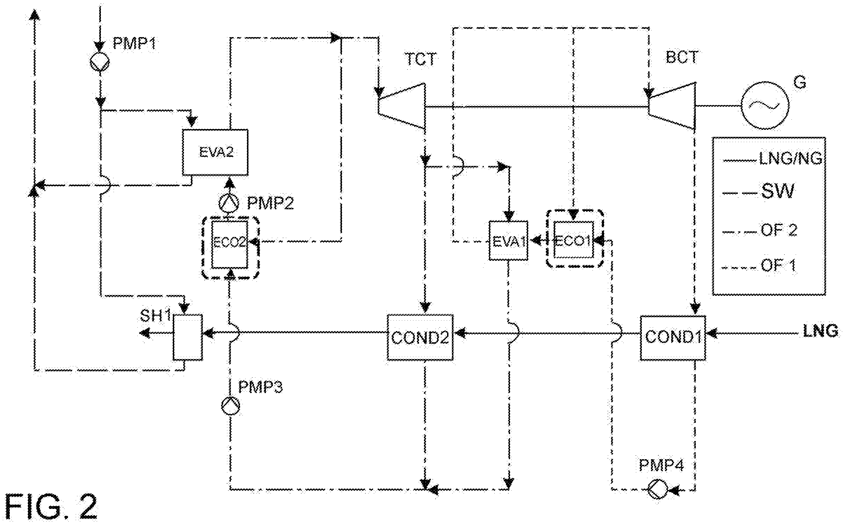

In an alternative aspect shown for example in figure 2, the heating of the first organic fluid (OF1) is performed by a heat exchanger wherein said first organic fluid (OF1) also acquires heat from the second organic fluid (OF2).

More in particular, two independent heating sections are provided:
- a first evaporator (EVA1) for the heat exchange with the second organic fluid (OF2) and
- a first heat exchanger (ECO1) for heating the first organic fluid (OF1).

In a preferred aspect, in such an embodiment, the first heat exchanger ECO1 is an economizer (recondenser type) which allows carrying out a regeneration of the thermo-dynamic cycle of the first organic fluid OF1.

For the purposes of the present invention, in both the embodiments, the cycle of the first organic fluid (first cycle) further comprises a turbine (BCT), wherein the first organic fluid (OF1) expands.

In a particular aspect of the invention, the turbine generates electrical energy, due to the generator (G in the figures, connected thereof).

Furthermore, a pump (PMP4) is provided placed downstream of the heating section COND1 and inlet to the first heat exchanger ECO1.

According to the present invention, the second cycle (or cycle of the second organic fluid) further comprises a second evaporator (EVA2) wherein a heat exchange is performed with which the second organic fluid (OF2) acquires thermal energy from the third fluid (SW).

For the purposes of the present invention, the cycle of the second organic fluid (OF2) further comprises a second heat exchanger (ECO2).

For the objects of the present invention, the second heat exchanger (ECO2) is represented by a traditional heat exchanger of the bundle tube type.

More preferably the second heat exchanger ECO2 is an economizer.

The second cycle further comprises a turbine (TCT), for expanding said second organic fluid (OF2).

In addition, there are provided:
- a pump (PMP3) downstream of the heating section COND2 and inlet to the second heat exchanger ECO2, and
- a pump (PMP2) downstream of the second heat exchanger ECO2 and upstream of the evaporator (EVA2).

According to an alternative embodiment not shown in the figures, the first and the second evaporator (EVA1 and EVA2) and respectively the first and the second heat exchanger (ECO1 and ECO2) may be placed in a single equipment.

For the purposes of the present invention, the third fluid is represented by a low temperature or high temperature heat source, according to the definitions mentioned above.

In a preferred aspect of the invention, such a heat source is preferably represented by seawater (SW in the figures).

The circuit of the third fluid further comprises pumps (PMP1) for pumping seawater.

In a preferred aspect of the invention, such a third fluid is the same fluid with which the heat exchange occurs with the second organic fluid (OF2) in the evaporator EVA2.

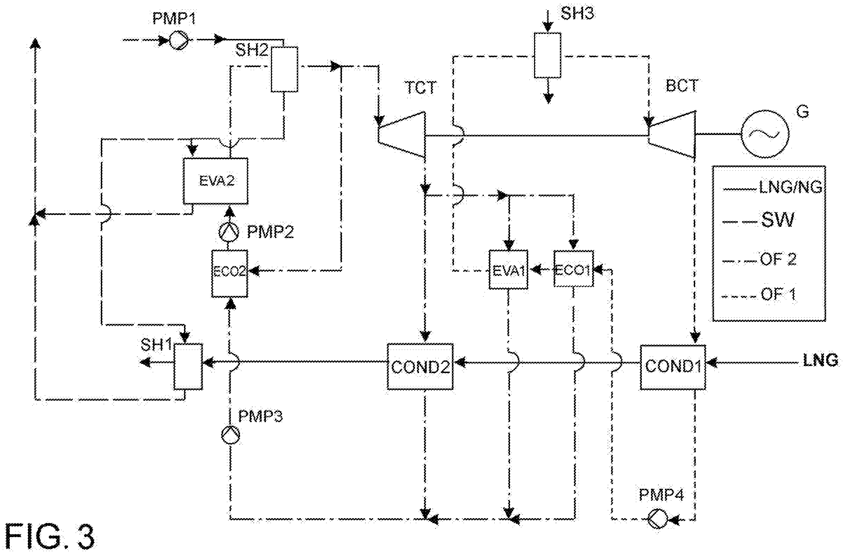

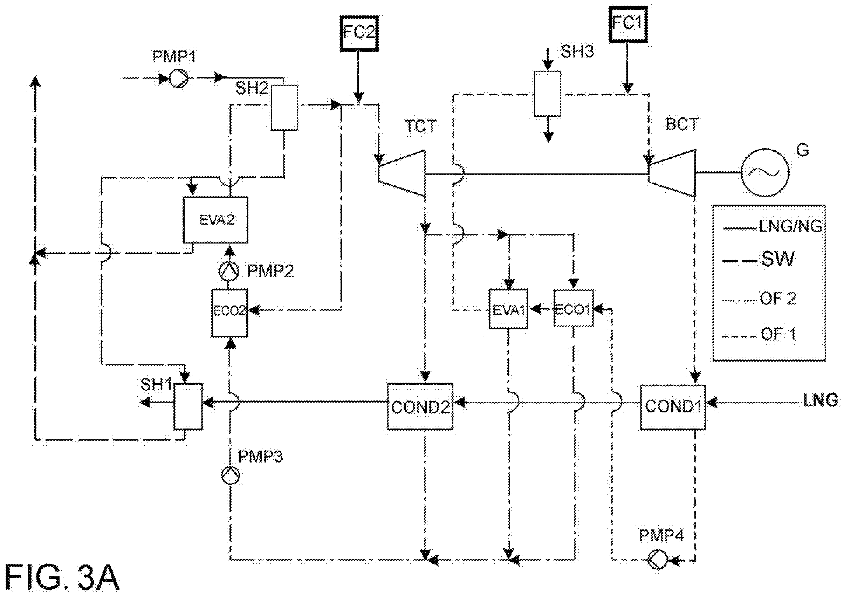

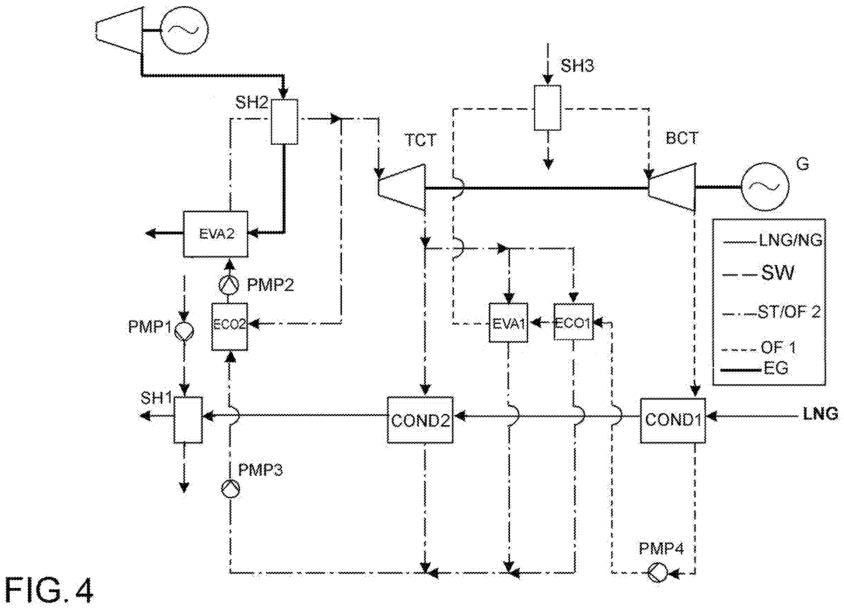

In alternative embodiments of the invention shown in figures 3 and 4, the described regasification line may further comprise:
- in the first cycle: a superheating section (SH3) for superheating the first organic fluid (OF1), and/or
- in the second cycle: a superheating section (SH2) for superheating the second organic fluid (OF2), and optionally
- in the first and/or in the second cycle a heat source obtained by Fuel Cell (FC1, FC2 in Figure 3A).

According to a preferred aspect of the invention, in one or both steps of superheating (SH3, SH2) a heat exchange may be performed with a low temperature source.

In an even more preferred aspect of the invention, such a low temperature source is represented by the third fluid (SW); therefore, such a fluid may be seawater (SW in the figures).

According to alternative aspects of the invention, in the superheating section (SH2) of the second organic fluid (OF2) a heat exchange is performed with:
- with a portion of flow of said third fluid (SW) (low temperature source);
- with a gas produced by a gas turbine or by an internal combustion engine or by a vapor cycle or process heat recoveries (high temperature source); or
- with a combination of said exchanges.

As regards the embodiment in Figure 3A, this provides the introduction of heat, in particular downstream of the turbine (TCT, BCT), preferably after the sections SH2 and SH3.

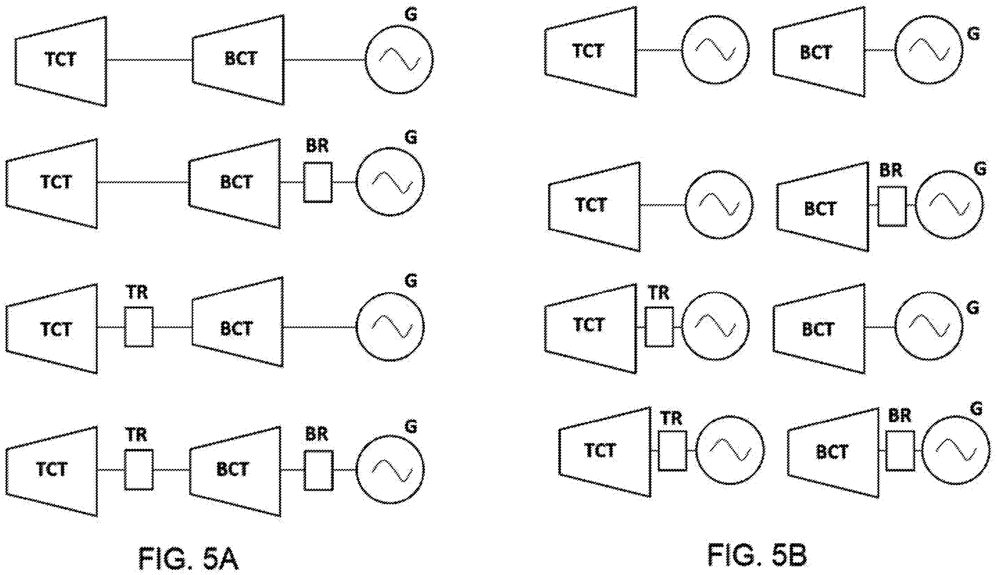

With reference to figure 5 (wherein TR=turbine reducer of the second cycle, BR=turbine reducer of the first cycle and G=generator) for the objects of the present invention, the turbines of the cycle of the first fluid (BCT) and of the second fluid (TCT) are directly keyed on a same shaft; furthermore, they may have the same rotation velocity and transfer mechanical energy to a same electrical generator (figure 5A).

In a preferred aspect, the two turbines (BCT and TCT) have different velocities, are keyed on different shafts and, due to a gear, transfer mechanical energy to a same electrical generator (figure 5A).

On the other hand, according to another aspect, the two turbines are not keyed on a same shaft and transfer mechanical energy to different electrical generators (figure 5B).

In an object, the present invention further describes a regasification terminal of liquefied gas comprising one or more regasification lines according the above description.

In particular, each regasification line is the line described above according to the present invention.

A regasification terminal is meant as a plant and generally comprises common structures represented by:
- liquefied gas storage tank,
- compression section comprising cryogenic pumps; generally, this is a low pressure pump (which consumes about 400 kWe) and a high pressure pump (which consumes about 1300 kWe),
- boil-off gas compressor (BOG compressor),
- connection to the outer network for electrical energy supply, when available, or an electrical generating unit as, for example, a gas turbine or internal combustion engine,
- vaporization section of the liquefied gas for example by Submerged Combustion Vaporization technology or Open Rack Vaporizer with the air supply circuit thereof and its compressor,
- and one or more traditional regasification lines and at least one regasification line according to the by-pass configuration described above, in order to satisfy the different requirements and to allow a good flexibility of the plant.

In an aspect of the invention, the terminal comprises from 2, 3, 4, 5 or 6 lines, preferably 4.

The different regasification lines operate in parallel.

Such a structure therefore allows the adaptation of already existing plants with the technology proposed by the present invention (revamping).

For the purposes of the present invention, a newly constructed regasification terminal may comprise one or more regasification lines according to the by-pass configuration described above, therefore without a "traditional" vaporization section, for example of the SCV type.

For plant technical requirements, it can not be excluded that some elements of single circuits are common to more regasification lines.

The possibility of realizing a plant comprising different regasification lines therefore allows performing the process of the present invention in an independent way, simultaneously or not, in each regasification line, with clear advantages in terms of flexibility.

In an object, the present invention describes a process for the regasification of a liquefied gas.

In particular, such a process further comprises the production of thermal energy and of electrical energy.

In particular, according to claim 1 and dependent claims, the process of the invention comprises the steps of:
1) operating a first step of heating the liquefied gas by means of a heat exchange with a first organic fluid (OF1); and
2) operating a second step of heating the liquefied gas with a second organic fluid (OF2).

For the purposes of the present invention, said first organic fluid (OF1) and said second organic fluid (OF2) are mutually different.

In particular, said first organic fluid (OF1 in the figures) is chosen from the group comprising: alkanes for example ethane and propane, alkenes for example ethylene and refrigerating fluids represented for example by R41, R143a, R125.

In a preferred aspect of the invention, the first organic fluid is ethane.

In particular, said second organic fluid (OF2 in the figures) is chosen from the group comprising: alkanes such as for example ethane and propane, alkenes such as for example ethylene and refrigerating fluids represented for example by R143, R32, R143a, R125.

In a preferred aspect of the invention, the second organic fluid is propane.

According to an aspect of the present invention, the process comprises a further step:
3) of superheating/heating the gas with a third fluid.

In a particularly preferred aspect, such a third fluid is represented by seawater.

More in particular, according to the process of the invention shown in figure 1, the first organic fluid (OF1), before step 1), is in turn subjected to a step I) of heat exchange (HEAT1) by means of which it acquires thermal energy from the second organic fluid (OF2).

Accordingly, step I) (HEAT1) in turn comprises the steps:
Ia) of subjecting said first organic fluid to a step of heating in a first heat exchanger (ECO1); and
Ib) of subjecting said first organic fluid to a step of evaporating in a first evaporator (EVA1).

Both steps are performed by acquiring heat from the second organic fluid (OF2).

In particular, steps Ia) and Ib) are performed by acquiring heat from different portions of a flow of said second organic fluid (OF2).

Even more in particular, the portion of the second organic fluid (OF2) which operates in step Ia) does not also operate in step Ib), and vice versa.

According to the present invention shown for example in figure 2, in step I) the first organic fluid (OF1) is subjected to a heat exchange step by means of which it also acquires heat from the second organic fluid (OF2).

More in particular, it provides the steps:
Ia) of regenerating said first organic fluid (OF1) in a first heat exchanger (ECO1), in this case an economizer and
Ib) of subjecting said first organic fluid (OF1) to a step of evaporating in a first evaporator (EVA1).

Therefore, the steps mentioned above are performed by acquiring heat from the second organic fluid (OF2) in step Ib) and by acquiring heat by a portion of the first organic fluid (OF1) outlet from the first evaporator (EVA1) in step Ib).

More in particular, the first heat exchanger ECO1 is represented by an economizer.

For the purposes of the present invention, before said step 1) and after said step I), that is after said steps Ia) and Ib), the first organic fluid (OF1) is subjected to a step II) of expanding in turbine (BCT) wherein mechanical power and electrical energy are extracted.

In an embodiment of the invention shown in Figure 3A, before step II) of expanding in turbine (BCT), the first organic fluid (OF1) may be subjected to a step of heating with the heat coming from a fuel cell (FC1).

As regards the second organic fluid (OF2), before step 2) it is subjected to a step Ib') of evaporating in a second evaporator (EVA2).

Furthermore, before step 2) and after step Ib') the second organic fluid (OF2) is further subjected to a step II') of expanding in a turbine (TCT).

In an embodiment of the invention shown in Figure 3A, before step II') of expanding in turbine, the second organic fluid (OF2) may be subjected to a step of heating with the heat coming from a source represented by a fuel cell (FC2).

More in detail, it shall be noted that the flow of the second organic fluid (OF2) in step 2) is a portion of the flow obtained after such a step II') of expanding in turbine (TCT).

For the purposes of the present invention, in fact, a second portion of the flow of the second organic fluid (OF2) outlet from the turbine (TCT) after step II') of expanding is the flow which performs step Ib), of evaporating the first organic fluid (OF1) in the first evaporator (EVA1) and wherein heating is also provided Ia) in the first heat exchanger (ECO1).

In a preferred aspect of the invention, it may be provided that a portion of the flow of the second organic fluid (OF2) outlet from the second evaporator (EVA2), and that is after step Ib'), operates a step Ia') of preheating (regenerating) in a second heat exchanger (ECO2), preferably an economizer, to the advantage of the second organic fluid (OF2) itself (which is found in liquid state).

According to a further embodiment of the invention, after step Ib') and before step Ia'), the second organic fluid (OF2) is subjected to a heat exchange step Ic') by means of which it acquires heat from a fourth fluid thus superheating itself (SH2).

According to preferred embodiment, such a fourth fluid is obtained by a low temperature heat source or by a high temperature heat source or by combinations of the two types of sources.

According to such an aspect, the flow portion of the second organic fluid (OF2) which operates the regeneration of step Ia') is a portion of said second organic fluid (OF2) obtained after the step of superheating Ic').

In particular, such heating of step Ia') is performed in a first heat exchanger (ECO1) of the bundle tube type.

Furthermore, as shown in figure 3 and figure 4, it may be provided that a portion of the fourth fluid after step Ic') operates the heat exchanger in step Ib') (in EVA2).

In yet another embodiment it may be provided that a portion of the fourth fluid after step Ic'), optionally also after the heat exchange of step Ib'), operates the heat exchange of step 3) (in SH1) (and therefore, the third fluid and the fourth fluid coincide).

According to a further alternative embodiment of the invention not shown in the figures, after step 3) the gas may be subjected to a step of superheating up to a temperature of about 200°C and subsequently of expanding in turbine thus producing mechanical and electrical energy, cooling down to a temperature required for the redelivery in the network (about 3°C).

As regards the first organic fluid (OF1), in an alternative embodiment of the invention, it may also be subjected, after step Ib), to a step Ic) of superheating.

Such a step Ic) is preferably performed by the heat exchange with a portion of the flow of the third fluid.

For this purpose, the third fluid is represented by a low temperature heat source which, in a preferred embodiment, is seawater.

According to a further aspect, the present invention describes the use of a recondenser in a Rankine cycle with economizer function, in order to preheat an organic fluid at liquid state (contrary to its typical function of the supercooling of a gas such as the condensation of the boil off gas).

With particular reference to the diagram of figure 1, according to a preferred embodiment of the invention, the process of the invention may comprise the following cycles and circuits.

### Cycle of the first organic fluid (OF1)_

The first organic fluid OF1 (ethane) with flow rate 56 t/h, evaporates in the first evaporator EVA1, with the introduction of heat from the cycle of the second organic fluid (6.7 MWt), at a temperature of -47.4°C and pressure of 6.04 bar (21).

The current expands in a turbine (BCT in the figures) up to 0.85 bar and -91.8°C (22), subsequently condenses in the condenser COND1 (7.3 MWt, LNG evaporator side) to 0.8 bar -92.8°C (23).

The pump PMP4 raises the pressure to 6.76 bar (24).

In the first heat exchanger ECO1 the current achieves a temperature of -42.4°C and pressure of 6.25 bar (25) thus concluding the cycle of the first organic fluid.

### Cycle of the second organic fluid (OF2)

The organic fluid OF2 (propane) with flow rate 204 t/h, evaporates in the second evaporator EVA2, with the introduction of heat from seawater (21.3 MWt), at a temperature of 0°C and pressure of 4.75 bar (1).

A fraction of the flow (16) of about 43 t/h is sent to the mixed heat exchanger (constructive recondenser type, ECO2) which also has a regenerating function of the thermo-dynamic cycle of the second fluid.

A flow of about 160 t/h (2) enters into the turbine TCT and expands up to 1 bar and - 42.4°C (3).

A fraction of the outlet flow from the turbine (TCT) (4) of about 90 t/h condenses in the condenser COND2 (10.5 MWt, LNG evaporator side) at 0.96 bar and -43.4°C (8).

Another fraction withdrawn outlet from the turbine (TCT) 72 t/h is divided in two currents: one of 57 t/h (6) and one of 15 t/h which go to the first evaporator EVA1 (6.7 MWt) and to the first heat exchanger (ECO1) of the bundle tube type (1.8 MWt) of the cycle of the first organic fluid (OF1) respectively.

The currents outlet from the first evaporator EVA1 (10) and from the first heat exchanger ECO1 (11) are in conditions of about 0.95 bar and -43.4°C and rejoin in a single current of 72 t/h (9), which in turn joins the current (8) thus forming a singe current of about 162 t/h (12).

The pump PMP3 brings the current (12) to a pressure of 6.65 bar (13).

The current (13) mixes in the second heat exchanger ECO2, for example an economizer (thus also carrying out a regeneration) with the current (16) thus forming the current 14 of about 204 t/h which is subsequently pumped by the pump PMP2 with a small increase of pressure up to 4.89 bar and at a temperature of -0.6°C thus concluding the cycle of the second organic fluid (OF2).

### LNG (energy by-pass) circuit

The liquefied natural gas (LNG) is withdrawn at a temperature of about -155°C and at atmospheric pressure and pumped up to 80 bar (100).

Subsequently, it receives heat in COND1 arriving at a temperature of -94°C (101) and subsequently heated in COND2 up to -45°C (102); it ends the evaporation superheating in the super heater (SH1) thus receiving heat from the third fluid (seawater) up to 3°C (103).

### Cycle of the third fluid

A flow rate of 5400 t/h of seawater is withdrawn at a temperature of 9°C (200) at the seawater outlet, wherein the grids and filtering systems (not shown in the diagram) withhold organic substances (algae, mollusks, etc.), sand and particulates in general.

The water is pumped to a pressure of about 2 bar (201) and the current is divided in two flows, of which about 3780 t/h go to the second evaporator EVA2 (202) and about 1620 t/h to the Super Heater SH1 (203).

After that, the two currents (204, 206) are cooled to 5°C, rejoin and are released into the sea at a temperature of 4°C.

On the other hand, with reference to the diagram of figure 3, a super heater (SH2, SH3) which receives heat from seawater is inserted both into the cycle of the first fluid and into the cycle of the second fluid outlet from the second and from the first evaporator (respectively, EVA2 and EVA1), having the function of increasing the enthalpy of the organic fluids OF1 and OF2 before entering into the turbine and extracting greater power and/or holding after the expansion in turbine, the titer outlet from the turbine itself above the values acceptable to avoid erosion/damage of the turbine vanes (> about 0.9).

With reference to the diagram in figure 4, the super heater SH2 of the cycle of the second organic fluid (OF2) receives the heat from discharge gases of a gas turbine, an alternative internal combustion engine, a vapor cycle, the process heat recovery, a renewable source (for example: solar heating) and/or combinations of such sources (at relatively high temperatures: greater than 180°C, preferably greater than 300°C, more preferably greater than 400°C).

From the description above the person skilled in the art may understand the numerous advantages offered by the present invention.

First of all, the selection of organic fluid with temperature comprised between -40°C and -90°C allows an energy optimization and allows using up to 70% of the available refrigeration units during the evaporation of the liquefied natural gas in supercritical form.

The use of a heat exchanger of the recondenser type, in the cycle of the first organic fluid (OF1) (embodiment in figure 2) and of the second organic fluid (OF2), allows maximizing the heat exchange with reduced overall dimensions and weight with respect to the conventional mixed exchangers.

With respect to the technology provided by the patent application of Ormat Technologies Inc. mentioned above, a greater efficiency is obtained due to the use of a greater value of available refrigeration units, including those at temperatures higher than those of condensation of the first organic fluid (OF1); in fact, a fraction of the heat discharged by the cycle of the second organic fluid (OF2) evaporates the liquefied natural gas (LNG) using the available refrigeration units at higher temperatures, while another fraction evaporates the organic fluid of the cycle of the second organic fluid, wherein the remaining part allows carrying out a step of preheating within the cycle of the first organic liquid, entirely improving the efficiency of the rankine cycle.

The described technology allows working also in an energy by-pass configuration, in the presence of any disconnection of the Organic Rankine Cycle due to technical or maintenance problems.

In regulating conditions and in the configurations wherein heat provided by a primary power cycle is used (for example gas turbine or internal combustion engine) or by a combined cycle, it globally has an electrical production increase (primary power cycle electrical power + ORC cycle electrical power), which may exceed that required by the plant/regasification line with electrical and thermal load balancing problems; in this condition, the energy by-pass configuration allows to regulate the electrical and thermal loads of the regasification plant without stopping production, thus being able to continue to regasify with the conventional technology and taking energy from the network or from the electrical generating unit of the plant or regasifying with the innovative technology and exporting the electrical energy surplus when a connection to the external network is present.

Considering a modular solution, the energy by-pass is used on some lines drawing electrical energy from the other lines which have an electrical energy surplus, balancing the overall electrical and thermal loads without using the outer network.

The use of the Organic Rankine Cycle technology allows to close entirely the electrical balance of a regasification line, of a fraction of the electrical power of the entire plant or of the entire regasification plant.

On the other hand, compared to the Open Rack Vaporizer, the present invention allows the use of seawater even in conditions which would obstruct the use of the ORV; furthermore, it is not required to chemically treat the seawater and to pump it to overcome the difference in level due to the height of the panels and suppliers for equipment to be used are widely available and easy to find.

The person skilled in the art may further easily understand how the technology described above may be applied not only to the construction of new regasification lines or plants, but also to the modification of existing plants (revamping).

The regasification terminal described by the present invention allows to satisfy multiple needs, such as, the need to adapt the plant flows to the needs of the regasified or stored LNG and, on the contrary, to adapt the operation of the plant to any reduction of the LNG flow, to technical requirements connected for example, to the routine and special maintenance of one or more lines, due to the undisputed management flexibility.

The invention described above may be applied without any particular limitation to the regasification of liquid hydrogen.

Furthermore, the principles at the basis of the invention also render possible the use of a liquid cryogenic storage (not necessarily represented by a gas to be regasified) such as a cold well.

As a further application, the invention may be used for forming cryogenic storages.

In particular, reference may be made to the following definitions of cryogenic temperature from the fluid point of view:
- lower than -90°C/-100°C: cryogenic fluids;
- higher than -90°C/-100°C: refrigerating fluids;
while for solid materials a temperature of -45°C is considered as a limit between cryogenic and non-cryogenic material.

Finally, a heat exchanger partially filled with a suitable material, represented for example by metal grit, plastic material chips, allows optimizing the heat exchange and the internal regenerations, to the advantage of the efficiency of the system.

## Claims

1. A process for the regasification of a liquefied gas comprising the steps of:
1) operating a first step of heating the liquefied gas by means of a heat exchange with a first organic fluid (OF1);
2) operating a second step of heating of said liquefied gas with a second organic fluid (OF2), said second organic fluid (OF2) being different from the first organic fluid (OF1);
said first organic fluid (OF1), before step 1) being in turn subjected to a heat exchange step I) by means of which it acquires thermal energy from different portions of a flow of said second organic fluid (OF2), said step I) comprising:
Ia) of subjecting said first organic fluid (OF1) to a step of heating in a first heat exchanger (ECO1), preferably in an economizer; and
Ib) of subjecting said first organic fluid (OF1) to a step of evaporating in a first evaporator (EVA1), step Ib) being performed by acquiring heat from said second organic fluid (OF2),
wherein said second organic fluid (OF2) before step 2) is subjected to a step Ib') of evaporating in a second evaporator (EVA2) and a step II') of expansion in a turbine (TCT),
wherein the flow of said second organic fluid (OF2) in step 2) is a first portion and the flow of said second organic fluid (OF2) in step Ib) is a second portion respectively of the flow obtained after step II') of expansion in turbine (TCT).

2. The process for the regasification of a liquefied gas according to the preceding claim, further comprising the step of:
3) operating a third step of heating of the liquefied gas with a third fluid,
wherein said third fluid is represented by a low-temperature heat source.

3. The process for the regasification of a liquefied gas according to the preceding claim, wherein said second organic fluid (OF2) before said step II') is subjected to a step of heating with the heat coming from a fuel cell (FC2).

4. The process for the regasification of a liquefied gas according to any one of the preceding claims 1 or 3, wherein a portion of the flow of said second organic fluid (OF2) before step Ib') is subjected to a step Ia') of heating in a second heat exchanger (ECO2), preferably in an economizer.

5. The process for the regasification of a liquefied gas according to the preceding claim, wherein said step Ia) is performed by acquiring heat from a portion of said first organic fluid (OF1) obtained after said step Ib).

6. The process for the regasification of a liquefied gas according to any one of the preceding claims from 1 to 5, wherein before said step 1) and after said step I), i.e. after said steps Ia) and Ib), the first organic fluid (OF1) is subjected to a step II) of expansion in a turbine (BCT).

7. The process for the regasification of a liquefied gas according to the preceding claim, wherein said first organic fluid (OF1) before said step II) is subjected to a step of heating with the heat coming from a fuel cell (FC1).

8. The process for the regasification of a liquefied gas according to any one of the preceding claims from 1 to 7, wherein in step Ib') said second organic fluid (OF2) acquires heat from said third fluid which is represented by a low-temperature heat source.

9. The process for the regasification of a liquefied gas according to any one of the preceding claims from 1 to 8, wherein said step Ib') and said step 3) are performed by means of different flows of said third fluid which is represented by a low-temperature heat source.

10. The process for the regasification of a liquefied gas according to any one of the preceding claims 1 to 9, wherein a step Ic) of further heating of said first organic fluid (OF1) is performed after step Ia) and Ib).

11. The process for the regasification of a liquefied gas according to the preceding claim, wherein said step Ic) is performed by exchanging heat with a portion of flow of said third fluid which is represented by a low-temperature heat source.

12. The process for the regasification of a liquefied gas according to any one of the preceding claims 1 to 11, wherein a further step Ic') of heating said second fluid (OF2) is performed after said step Ib').

13. The process for the regasification of a liquefied gas according to the preceding claim, wherein said step Ic') is performed by exchanging heat:
- with a portion of flow of said third fluid which is represented by a low-temperature source;
- with a portion of a fourth fluid which is a high-temperature source;
- with combinations of said exchanges.

14. The process for the regasification of a liquefied gas according to claim 12 or 13, wherein the flow portion of the second organic fluid (OF2) which operates the regeneration of step Ia') is a portion of said second organic fluid (OF2) obtained after said step of heating Ic').

15. The process for the regasification of a liquefied gas according to any one of the preceding claims from 12 to 14, wherein a portion of said third fluid or of said fourth fluid after step Ic') operates the heat exchange of step Ib') (in EVA2).

16. The process for the regasification of a liquefied gas according to any one of the preceding claims from 12 to 15, wherein a portion of the fourth fluid after step Ic'), possibly also after the heat exchange of step Ib'), operates the heat exchange of step 3) with the liquefied gas.

17. The process for the regasification of a liquefied gas according to any one of the preceding claims from 1 to 16, wherein said liquefied gas is liquefied natural gas (LNG).

18. The process for the regasification of a liquefied gas according to any one of the preceding claims from 1 to 17, wherein said third fluid which is represented by a low-temperature source is seawater.

19. The process for the regasification of a liquefied gas according to any one of the preceding claims from 1 to 16 wherein said liquefied gas is chosen from the group comprising: air, nitrogen, hydrocarbon compounds, e.g. alkanes, such as for example propane and butane, or alkenes, such as for example ethylene and propylene; hydrogen.

20. The process for the regasification of a liquefied gas according to any one of the preceding claims from 1 to 19, for forming a cryogenic storage.

21. A regasification line for a liquefied gas wherein it is carried out the process according to claim 1, comprising a first heating section (COND1), a second heating section (COND2), wherein said first heating section (COND1) is part of a first cycle which operates with a first organic fluid (OF1) and said second heating section (COND2) is part of a second cycle which operates with a second organic fluid (OF2), said organic fluids (OF1,OF2) being mutually different, wherein said first cycle comprises a first evaporator (EVA1) of said first organic fluid (OF1) which operates with a second portion of said second organic fluid (OF2), a first heat exchanger (ECO1) in which the heating of said first organic fluid is performed and a turbine (BCT) for expanding said first organic fluid (OF1) and wherein said second cycle comprises a second heat evaporator (EVA2) wherein a heat exchange is operated with said second organic fluid (OF2) acquiring thermal energy from a low-temperature or high-temperature heat source, a second heat exchanger (ECO2) for heating said second organic fluid (OF2) and a turbine (TCT) for the expansion of said second organic fluid (OF2), outlet from said turbine (TCT) obtaining said second portion of the second organic fluid (OF2).

22. The regasification line for a liquefied gas according to the preceding claim further comprising a third heating section (SH1).

23. The regasification line for a liquefied gas according to claim 21, wherein said first heat exchanger (ECO1) is an economizer.

24. The regasification line for a liquefied gas according to any one of the preceding claims 21 to 23, wherein said first cycle further comprises a heat source which is represented by a Fuel Cell (FC1) downstream of the turbine (BCT).

25. The regasification line for a liquefied gas according to any one of the preceding claims from 21 to 24, wherein said third heating section (SH1) comprises a heat exchanger which operates on the cycle of a third fluid which is represented by a low-temperature heat source.

26. The regasification line for a liquefied gas according to claim 21, wherein said second heat exchanger (ECO2) is an economizer.

27. The regasification line for a liquefied gas according to any one of the preceding claims 21 to 26, wherein said second cycle further comprises a heat source represented by a fuel cell (FC2) downstream of the turbine (TCT).

28. The regasification line for a liquefied gas according to any one of the preceding claims 21 to 27, wherein said first cycle further comprises a heating section (SH3) of said first organic fluid (OF1) and/or wherein said second cycle further comprises a heating section (SH2) of said second organic fluid (OF2).

29. The regasification line for a liquefied gas according to any one of the preceding claims 21 to 28, wherein said liquefied gas is chosen from the group comprising: air, nitrogen, hydrocarbon compounds, e.g. alkanes, such as for example propane and butane, or alkenes, such as for example ethylene and propylene; hydrogen.

30. A regasification terminal for a liquefied gas, comprising one or more regasification lines according to any one of the preceding claims from 21 to 29, which regasification lines may be in parallel.

31. The regasification terminal for a liquefied gas according to the preceding claim, further comprising a vaporization section of the Submerged Combustion Vaporizer (SCV) or Open Rack Vaporizer type.

## Patentansprüche

1. Verfahren zur Wiedervergasung eines verflüssigten Gases, umfassend die Schritte:
1) Durchführen eines ersten Schritts des Erwärmens des verflüssigten Gases mittels eines Wärmeaustausches mit einer ersten organischen Flüssigkeit (OFl);
2) Durchführen eines zweiten Schritts des Erwärmens des verflüssigten Gases mit einer zweiten organischen Flüssigkeit (OF2), wobei sich die zweite organische Flüssigkeit (OF2) von der ersten organischen Flüssigkeit (OFl) unterscheidet;
wobei die erste organische Flüssigkeit (OFl) vor dem Schritt 1) ihrerseits einem Wärmeaustauschschritt I) unterzogen wird, durch den sie thermische Energie aus verschiedenen Abschnitten eines Stroms der zweiten organischen Flüssigkeit (OF2) aufnimmt, dieser Schritt I) umfassend:
Ia) Unterziehen die erste organische Flüssigkeit (OFl) einem Erwärmungsschritt in einem ersten Wärmeaustauscher (ECOl), vorzugsweise in einem Economiser; und
Ib) Unterziehen die erste organische Flüssigkeit (OFl) einem Verdampfungsschritt in einem ersten Verdampfer (EVAl), wobei Schritt Ib) durch Aufnahme von Wärme aus der zweiten organischen Flüssigkeit (OF2) durchgeführt wird,
wobei die zweite organische Flüssigkeit (OF2) vor dem Schritt 2) einem Verdampfungsschritt Ib') in einem zweiten Verdampfer (EVA2) und einem Ausweitungsschritt II') in einer Turbine (TCT) unterzogen wird,
wobei der Strom der zweiten organischen Flüssigkeit (OF2) in dem Schritt 2) einen ersten Abschnitt ist und der Strom der zweiten organischen Flüssigkeit (OF2) in dem Schritt Ib) einen zweiten Abschnitt des Stroms ist, der jeweils nach dem Ausweitungsschritt II') in der Turbine (TCT) erhalten wird.

2. Verfahren zur Wiedervergasung eines verflüssigten Gases nach dem vorhergehenden Anspruch, ferner umfassend den folgenden Schritt:
3) Durchführen eines dritten Schritts des Erwärmens des verflüssigten Gases mit einer dritten Flüssigkeit,
wobei die dritte Flüssigkeit durch eine Niedertemperaturwärmequelle dargestellt wird.

3. Verfahren zur Wiedervergasung eines verflüssigten Gases nach dem vorhergehenden Anspruch, wobei die zweite organische Flüssigkeit (OF2) vor dem Schritt II') einem Erwärmungsschritt durch Wärme unterzogen wird, die aus einer Brennstoffzelle (FC2) kommt.

4. Verfahren zur Wiedervergasung eines verflüssigten Gases nach einem der vorhergehenden Ansprüche 1 oder 3, wobei ein Abschnitt des Stroms der zweiten organischen Flüssigkeit (OF2) vor dem Schritt Ib') einem Schritt Ia') des Erwärmens in einem zweiten Wärmeaustauscher (ECO2), vorzugsweise in einem Economiser, unterzogen wird.

5. Verfahren zur Wiedervergasung eines verflüssigten Gases nach dem vorhergehenden Anspruch, wobei der Schritt Ia) durch Aufnahme von Wärme aus einem Abschnitt der ersten organischen Flüssigkeit (OFl) durchgeführt wird, der nach dem Schritt Ib) erhalten wird.

6. Verfahren zur Wiedervergasung eines verflüssigten Gases nach einem der vorhergehenden Ansprüche 1 bis 5, wobei die erste organische Flüssigkeit (OF1) vor dem Schritt 1) und nach dem Schritt I), d. h. nach den Schritten Ia) und Ib), einem Ausweitungsschritt II) in einer Turbine (BCT) unterzogen wird.

7. Verfahren zur Wiedervergasung eines verflüssigten Gases nach dem vorhergehenden Anspruch, wobei die erste organische Flüssigkeit (OF1) vor dem Schritt II) einem Erwärmungsschritt durch Wärme unterzogen wird, die aus einer Brennstoffzelle (FC1) kommt.

8. Verfahren zur Wiedervergasung eines verflüssigten Gases nach einem der vorhergehenden Ansprüche 1 bis 7, wobei in dem Schritt Ib') die zweite organische Flüssigkeit (OF2) Wärme aus der dritten Flüssigkeit aufnimmt, die durch eine Niedertemperaturwärmequelle dargestellt wird.

9. Verfahren zur Wiedervergasung eines verflüssigten Gases nach einem der vorhergehenden Ansprüche 1 bis 8, wobei die Schritte Ib') und der Schritt 3) mittels verschiedener Ströme der dritten Flüssigkeit durchgeführt werden, die durch eine Niedertemperaturwärmequelle dargestellt wird.

10. Verfahren zur Wiedervergasung eines verflüssigten Gases nach einem der vorhergehenden Ansprüche 1 bis 9, wobei ein Schritt Ic) des ferner Erwärmens der ersten organischen Flüssigkeit (OF1) nach dem Schritt Ia) und Ib) durchgeführt wird.

11. Verfahren zur Wiedervergasung eines verflüssigten Gases nach dem vorhergehenden Anspruch, wobei der Schritt Ic) durch Wärmeaustausch mit einem Abschnitt des Stroms der dritten Flüssigkeit durchgeführt wird, die durch eine Niedertemperaturwärmequelle dargestellt wird.

12. Verfahren zur Wiedervergasung eines verflüssigten Gases nach einem der vorhergehenden Ansprüche 1 bis 11, wobei ein weiterer Schritt Ic') des Erwärmens der zweiten Flüssigkeit (OF2) nach dem Schritt Ib') durchgeführt wird.

13. Verfahren zur Wiedervergasung eines verflüssigten Gases nach dem vorhergehenden Anspruch, wobei der Schritt Ic') durch Wärmeaustausch durchgeführt wird:
- mit einem Abschnitt des Stroms der dritten Flüssigkeit, die durch eine Niedertemperaturquelle dargestellt wird;
- mit einem Abschnitt des Stroms einer vierten Flüssigkeit, die eine Hochtemperaturquelle ist;
- mit Kombinationen dieser Austausche.

14. Verfahren zur Wiedervergasung eines verflüssigten Gases nach Anspruch 12 oder 13, wobei der Stromabschnitt der zweiten organischen Flüssigkeit (OF2), der die Aufarbeitung in Schritt Ia') durchführt, ein Abschnitt der zweiten organischen Flüssigkeit (OF2) ist, der nach dem Erwärmungsschritt Ic') erhalten wird.

15. Verfahren zur Wiedervergasung eines verflüssigten Gases nach einem der vorhergehenden Ansprüche 12 bis 14, wobei ein Abschnitt der dritten Flüssigkeit oder der vierten Flüssigkeit nach dem Schritt Ic') den Wärmeaustausch von Schritt Ib') (in EVA2) durchführt.

16. Verfahren zur Wiedervergasung eines verflüssigten Gases nach einem der vorhergehenden Ansprüche 12 bis 15, wobei ein Abschnitt der vierten Flüssigkeit nach dem Schritt Ic'), möglicherweise auch nach dem Wärmeaustausch von Schritt Ib'), den Wärmeaustausch von Schritt 3) mit dem verflüssigten Gas durchführt.

17. Verfahren zur Wiedervergasung eines verflüssigten Gases nach einem der vorhergehenden Ansprüche 1 bis 16, wobei das verflüssigte Gas verflüssigtes Erdgas (LNG) ist.

18. Verfahren zur Wiedervergasung eines verflüssigten Gases nach einem der vorhergehenden Ansprüche 1 bis 17, wobei die dritte Flüssigkeit, die durch eine Niedertemperaturquelle dargestellt wird, Meerwasser ist.

19. Verfahren zur Wiedervergasung eines verflüssigten Gases nach einem der vorhergehenden Ansprüche 1 bis 16, wobei das verflüssigte Gas aus der Gruppe bestehend aus: Luft, Stickstoff, Kohlenwasserstoffverbindungen, beispielweise Alkane wie beispielweise Propan und Butan, oder Alkene wie beispielweise Ethen und Propen; Wasserstoff ausgewählt wird.

20. Verfahren zur Wiedervergasung eines verflüssigten Gases nach einem der vorhergehenden Ansprüche 1 bis 19 zur Bildung einer kryogenen Ablagerung.

21. Wiedervergasungslinie für ein verflüssigtes Gas, in der das Verfahren nach Anspruch 1 durchgeführt wird, umfassend einen ersten Heizabschnitt (COND1), einen zweiten Heizabschnitt (COND2), wobei der erste Heizabschnitt (COND1) Teil eines ersten Zyklus ist, der mit einer ersten organischen Flüssigkeit (OF1) arbeitet, und der zweite Heizabschnitt (COND2) Teil eines zweiten Zyklus ist, der mit einer zweiten organischen Flüssigkeit (OF2) arbeitet, wobei die organischen Flüssigkeiten (OFl, OF2) voneinander verschieden sind, wobei der erste Zyklus einen ersten Verdampfer (EVA1) der ersten organischen Flüssigkeit (OFl) umfasst, der mit einem zweiten Abschnitt der zweiten organischen Flüssigkeit (OF2) arbeitet, einen ersten Wärmeaustauscher (ECOl), in dem das Erwärmen der ersten organischen Flüssigkeit durchgeführt wird, und eine Turbine (BCT) zur Ausweitung der ersten organischen Flüssigkeit (OFl), und wobei der zweite Zyklus einen zweiten Verdampfer (EVA2) umfasst, in dem ein Wärmeaustausch mit der zweiten organischen Flüssigkeit (OF2) durch Aufnahme der thermischen Energie aus einer Niedertemperatur oder Hochtemperaturwärmequelle durchgeführt wird, einen zweiten Wärmeaustauscher (ECO2) zum Erwärmen der zweiten organischen Flüssigkeit (OF2) und eine Turbine (TCT) zur Ausweitung der zweiten organischen Flüssigkeit (OF2), Auslass aus der Turbine (TCT), indem der zweite Abschnitt der zweiten organischen Flüssigkeit (OF2) erhalten wird.

22. Wiedervergasungslinie für ein verflüssigtes Gas nach dem vorhergehenden Anspruch, ferner umfassend einen dritten Heizabschnitt (SH1).

23. Wiedervergasungslinie für ein verflüssigtes Gas nach Anspruch 21, wobei der erste Wärmeaustauscher (ECO1) ein Economiser ist.

24. Wiedervergasungslinie für ein verflüssigtes Gas nach einem der vorhergehenden Ansprüche 21 bis 23, wobei der erste Zyklus ferner eine Wärmequelle umfasst, die durch eine Brennstoffzelle (FCl) dargestellt ist, die stromabwärts der Turbine (BCT) angeordnet ist.

25. Wiedervergasungslinie für ein verflüssigtes Gas nach einem der vorhergehenden Ansprüche 21 bis 24, wobei der dritte Heizabschnitt (SH1) einen Wärmeaustauscher umfasst, der in dem Zyklus einer dritten Flüssigkeit arbeitet, die durch eine Niedertemperaturwärmequelle dargestellt wird.

26. Wiedervergasungslinie für ein verflüssigtes Gas nach Anspruch 21, wobei der zweite Wärmeaustauscher (ECO2) ein Economiser ist.

27. Wiedervergasungslinie für ein verflüssigtes Gas nach einem der vorhergehenden Ansprüche 21 bis 26, wobei der zweite Zyklus ferner eine Wärmequelle umfasst, die durch eine Brennstoffzelle (FC2) dargestellt ist, die stromabwärts der Turbine (TCT) angeordnet ist.

28. Wiedervergasungslinie für ein verflüssigtes Gas nach einem der vorhergehenden Ansprüche 21 bis 27, wobei der erste Zyklus ferner einen Heizabschnitt (SH3) der ersten organischen Flüssigkeit (OFl) umfasst und/oder wobei der zweite Zyklus ferner einen Heizabschnitt (SH2) der zweiten organischen Flüssigkeit (OF2) umfasst.

29. Wiedervergasungslinie für ein verflüssigtes Gas nach einem der vorhergehenden Ansprüche 21 bis 28, wobei das verflüssigte Gas aus der Gruppe bestehend aus: Luft, Stickstoff, Kohlenwasserstoffverbindungen, beispielweise. Alkane wie beispielweise Propan und Butan oder Alkene wie beispielweise Ethen und Propen; Wasserstoff ausgewählt wird.

30. Wiedervergasungsstation für ein verflüssigtes Gas, umfassend eine oder mehrere Wiedervergasungslinien nach einem der vorhergehenden Ansprüche 21 bis 29, wobei sich die Wiedervergasungslinien parallel erstrecken können.

31. Wiedervergasungsstation für ein verflüssigtes Gas nach dem vorhergehenden Anspruch, ferner umfassend einen Verdampfungsabschnitt des Typs Submerged Combustion Vaporizer (SCV) oder Open Rack Vaporizer.

## Revendications

1. Procédé de regazéification d'un gaz liquéfié, comprenant les étapes consistant :
1) à effectuer une première étape de chauffage du gaz liquéfié au moyen d'un échange thermique avec un premier fluide organique (OFl) ;
2) à effectuer une deuxième étape de chauffage dudit gaz liquéfié avec un deuxième fluide organique (OF2), ledit deuxième fluide organique (OF2) étant différent du premier fluide organique (OF1) ;
ledit premier fluide organique (OF1), avant l'étape 1), étant à son tour soumis à une étape d'échange thermique I) au moyen de laquelle il acquiert de l'énergie thermique à partir de différentes portions d'un flux dudit deuxième fluide organique (OF2), ladite étape I) comprenant :
Ia) soumettre ledit premier fluide organique (OFl) à une étape de chauffage dans un premier échangeur de chaleur (ECOl), de préférence dans un économiseur ; et
Ib) soumettre ledit premier fluide organique (OF1) à une étape d'évaporation dans un premier évaporateur (EVAl), l'étape Ib) étant réalisée en acquérant de la chaleur à partir dudit deuxième fluide organique (OF2),
lequel deuxième fluide organique (OF2), avant l'étape 2), est soumis à une étape Ib') d'évaporation dans un deuxième évaporateur (EVA2) et à une étape II') de détente dans une turbine (TCT),
le flux dudit deuxième fluide organique (OF2) dans l'étape 2) étant une première portion et le flux dudit deuxième fluide organique (OF2) dans l'étape Ib) étant une deuxième portion respectivement du flux obtenu après l'étape II') de détente dans la turbine (TCT).

2. Procédé de regazéification d'un gaz liquéfié selon la revendication précédente, comprenant en outre l'étape consistant :
3) à effectuer une troisième étape de chauffage du gaz liquéfié avec un troisième fluide,
lequel troisième fluide est représenté par une source de chaleur à basse température.

3. Procédé de regazéification d'un gaz liquéfié selon la revendication précédente, dans lequel ledit deuxième fluide organique (OF2), avant ladite étape II'), est soumis à une étape de chauffage avec la chaleur provenant d'une pile à combustible (FC2).

4. Procédé de regazéification d'un gaz liquéfié selon l'une quelconque des revendications précédentes 1 ou 3, dans lequel une portion du flux dudit deuxième fluide organique (OF2), avant l'étape Ib'), est soumise à une étape Ia') de chauffage dans un deuxième échangeur de chaleur (ECO2), de préférence dans un économiseur.

5. Procédé de regazéification d'un gaz liquéfié selon la revendication précédente, dans lequel ladite étape Ia) est réalisée en acquérant de la chaleur à partir d'une portion dudit premier fluide organique (OF1) obtenue après ladite étape Ib).

6. Procédé de regazéification d'un gaz liquéfié selon l'une quelconque des revendications précédentes 1 à 5, dans lequel avant ladite étape 1) et après ladite étape I), c'est-à-dire après lesdites étapes Ia) et Ib), le premier fluide organique (OF1) est soumis à une étape II) de détente dans une turbine (BCT).

7. Procédé de regazéification d'un gaz liquéfié selon la revendication précédente, dans lequel ledit premier fluide organique (OF1), avant ladite étape II), est soumis à une étape de chauffage avec la chaleur provenant d'une pile à combustible (FCl).

8. Procédé de regazéification d'un gaz liquéfié selon l'une quelconque des revendications précédentes 1 à 7, dans lequel, à l'étape Ib'), ledit deuxième fluide organique (OF2) acquiert de la chaleur à partir dudit troisième fluide représenté par une source de chaleur à basse température.

9. Procédé de regazéification d'un gaz liquéfié selon l'une quelconque des revendications précédentes 1 à 8, dans lequel ladite étape Ib') et ladite étape 3 sont réalisées au moyen de flux différents dudit troisième fluide représenté par une source de chaleur à basse température.

10. Procédé de regazéification d'un gaz liquéfié selon l'une quelconque des revendications précédentes 1 à 9, dans lequel une étape Ic) de chauffage supplémentaire dudit premier fluide organique (OFl) est réalisée après les étapes Ia) et Ib).

11. Procédé de regazéification d'un gaz liquéfié selon la revendication précédente, dans lequel ladite étape Ic) est réalisée par échange de chaleur avec une portion du flux dudit troisième fluide représenté par une source de chaleur à basse température.

12. Procédé de regazéification d'un gaz liquéfié selon l'une quelconque des revendications précédentes 1 à 11, dans lequel une étape Ic') supplémentaire de chauffage dudit deuxième fluide (OF2) est réalisée après ladite étape Ib').

13. Procédé de regazéification d'un gaz liquéfié selon la revendication précédente, dans lequel ladite étape Ic') est réalisée par échange de chaleur :
avec une portion du flux dudit troisième fluide représenté par une source à basse température ;
avec une portion d'un quatrième fluide qui est une source à haute température ;
avec des combinaisons desdits échanges.

14. Procédé de regazéification d'un gaz liquéfié selon la revendication 12 ou 13, dans lequel la portion de flux du deuxième fluide organique (OF2) qui effectue la régénération de l'étape Ia') est une portion dudit deuxième fluide organique (OF2) obtenue après ladite étape de chauffage Ic').

15. Procédé de regazéification d'un gaz liquéfié selon l'une quelconque des revendications précédentes 12 à 14, dans lequel une portion dudit troisième fluide ou dudit quatrième fluide, après l'étape Ic'), effectue l'échange thermique de l'étape Ib') (dans EVA2).

16. Procédé de regazéification d'un gaz liquéfié selon l'une quelconque des revendications précédentes 12 à 15, dans lequel une portion du quatrième fluide après l'étape Ic'), éventuellement aussi après l'échange thermique de l'étape Ib'), effectue l'échange thermique de l'étape 3) avec le gaz liquéfié.

17. Procédé de regazéification d'un gaz liquéfié selon l'une quelconque des revendications précédentes 1 à 16, dans lequel ledit gaz liquéfié est du gaz naturel liquéfié (GNL).

18. Procédé de regazéification d'un gaz liquéfié selon l'une quelconque des revendications précédentes 1 à 17, dans lequel ledit troisième fluide représenté par une source à basse température est de l'eau de mer.

19. Procédé de regazéification d'un gaz liquéfié selon l'une quelconque des revendications précédentes 1 à 16, dans lequel ledit gaz liquéfié est choisi dans le groupe comprenant : air, azote, composés hydrocarbonés, par exemple alcanes, tels que le propane et le butane, ou alcènes, tels que l'éthylène et le propylène ; hydrogène.

20. Procédé de regazéification d'un gaz liquéfié selon l'une quelconque des revendications précédentes 1 à 19, pour former un stockage cryogénique.

21. Ligne de regazéification pour un gaz liquéfié, dans laquelle est réalisé le procédé selon la revendication 1, comprenant une première section de chauffage (COND1), une deuxième section de chauffage (COND2), dans laquelle ladite première section de chauffage (COND1) fait partie d'un premier cycle qui fonctionne avec un premier fluide organique (OF1) et ladite deuxième section de chauffage (COND2) fait partie d'un deuxième cycle qui fonctionne avec un deuxième fluide organique (OF2), lesdits fluides organiques (OF1, OF2) étant mutuellement différents, dans laquelle ledit premier cycle comprend un premier évaporateur (EVAl) dudit premier fluide organique (OF1) qui fonctionne avec une deuxième portion dudit deuxième fluide organique (OF2), un premier échangeur de chaleur (ECO1) dans lequel est effectué le chauffage dudit premier fluide organique et une turbine (BCT) pour la détente dudit premier fluide organique (OF1) et dans laquelle ledit deuxième cycle comprend un deuxième évaporateur thermique (EVA2) dans lequel un échange thermique est effectué avec ledit deuxième fluide organique (OF2) acquérant de l'énergie thermique à partir d'une source de chaleur à basse température ou à haute température, un deuxième échangeur thermique (ECO2) pour chauffer ledit deuxième fluide organique (OF2) et une turbine (TCT) pour la détente dudit deuxième fluide organique (OF2), la sortie de ladite turbine (TCT) obtenant ladite deuxième portion du deuxième fluide organique (OF2).

22. Ligne de regazéification pour un gaz liquéfié selon la revendication précédente, comprenant en outre une troisième section de chauffage (SH1).

23. Ligne de regazéification pour un gaz liquéfié selon la revendication 21, dans laquelle ledit premier échangeur thermique (ECO1) est un économiseur.

24. Ligne de regazéification pour un gaz liquéfié selon l'une quelconque des revendications précédentes 21 à 23, dans laquelle ledit premier cycle comprend en outre une source de chaleur représentée par une pile à combustible (FCl) en aval de la turbine (BCT).

25. Ligne de regazéification pour un gaz liquéfié selon l'une quelconque des revendications précédentes 21 à 24, dans laquelle ladite troisième section de chauffage (SH1) comprend un échangeur thermique qui fonctionne sur le cycle d'un troisième fluide représenté par une source de chaleur à basse température.

26. Ligne de regazéification pour un gaz liquéfié selon la revendication 21, dans laquelle ledit deuxième échangeur thermique (ECO2) est un économiseur.

27. Ligne de regazéification pour un gaz liquéfié selon l'une quelconque des revendications précédentes 21 à 26, dans laquelle ledit deuxième cycle comprend en outre une source de chaleur représentée par une pile à combustible (FC2) en aval de la turbine (TCT).

28. Ligne de regazéification pour un gaz liquéfié selon l'une quelconque des revendications précédentes 21 à 27, dans laquelle ledit premier cycle comprend en outre une section de chauffage (SH3) dudit premier fluide organique (OF1) et/ou dans laquelle ledit deuxième cycle comprend en outre une section de chauffage (SH2) dudit deuxième fluide organique (OF2).

29. Ligne de regazéification pour un gaz liquéfié selon l'une quelconque des revendications précédentes 21 à 28, dans laquelle ledit gaz liquéfié est choisi dans le groupe comprenant : air, azote, composés hydrocarbonés, par exemple alcanes, tels que le propane et le butane, ou alcènes, tels que l'éthylène et le propylène ; hydrogène.

30. Terminal de regazéification pour un gaz liquéfié, comprenant une ou plusieurs lignes de regazéification selon
l'une quelconque des revendications précédentes 21 à 29, lesquelles lignes de regazéification peuvent être en parallèle.

31. Terminal de regazéification pour un gaz liquéfié selon la revendication précédente, comprenant en outre une section de vaporisation du type Submerged Combustion Vaporizer (SCV) ou Open Rack Vaporizer.
